# FASCICULE DE BREVET EUROPEEN

(11) **EP 0 878 378 B1**
(45) Date de publication et mention de la délivrance du brevet: **28.08.2002**
(21) Numéro de dépôt: 98107686.2
(22) Date de dépôt: 28.04.1998
(51) Int. Cl.: B62D 9/02, B60G 3/01

(54) **Véhicule comportant une suspension à variation de carrossage actif**
Fahrzeugaufhängung mit aktiver Sturzänderung
Vehicle suspension with active camber variation

(30) Priorité: 16.05.1997 FR 9706227
(43) Date de publication de la demande: 18.11.1998
(60) Demande divisionnaire: 01112129.0
(73) Titulaire: Conception et Développement Michelin, 1762 Givisiez (CH)
(72) Inventeur: Laurent, Daniel, 1723 Marly (CH); Sebe, Marc, 1723 Marly (CH)
(74) Mandataire: Bauvir, Jacques

(56) Documents cités:
- US-A- 2 155 521
- US-A- 4 159 128
- US-A- 4 487 429
- US-A- 4 700 972

## Description

La présente invention concerne la liaison au sol de véhicules, notamment de véhicules routiers. Elle concerne tant le guidage d'une roue de véhicule par rapport à la caisse de ce véhicule, que l'organisation du débattement de la roue par rapport au châssis. Elle se rapporte particulièrement à des moyens utilisés pour contrôler de façon active la position du plan de roue par rapport à la caisse, et plus particulièrement à un véhicule selon les caractéristiques du préambule de la revendication indépendante 1.

On sait qu'une roue est montée sur un moyeu et que le moyeu est monté sur un porte-roue par l'intermédiaire d'un roulement matérialisant l'axe de rotation de la roue. Le guidage de la roue consiste à permettre un déplacement du porte-roue par rapport au véhicule, d'une ampleur suffisante pour la suspension du véhicule. Par ailleurs, le guidage de la roue doit être tel que le contrôle de la trajectoire du véhicule, via l'adhérence des pneus sur le sol, est assuré dans les meilleures conditions. Le mouvement de débattement que l'on recherche est de grande ampleur dans le sens vertical.

Il est courant de désigner ce mouvement par l'expression «suspension verticale ». On peut souhaiter permettre un faible mouvement dans le sens longitudinal (on parle alors de « suspension horizontale »), alors qu'idéalement on cherche à éviter tout mouvement relatif dans le sens transversal. En outre, le braquage et les variations de carrossage que pourraient induire tous ces mouvements doivent être rigoureusement contenus, ce qui apporte aussi une contrainte de conception dont l'homme du métier doit tenir compte.

Si on appelle « plan » de la roue le plan perpendiculaire à l'axe de rotation de la roue, passant par le milieu de la roue, ou plus précisément par le centre de l'aire de contact avec le sol d'un pneu monté sur ladite roue, la maîtrise des mouvements de débattement revient à dire que le guidage doit assurer une position rigoureusement maîtrisée du plan de la roue par rapport au châssis. On peut toujours définir un plan longitudinal et vertical constituant un repère lié au châssis, et repérer le sens préférentiel de roulement, qui est parallèle audit plan longitudinal. Le guidage du plan de la roue a pour but de maîtriser aussi rigoureusement que possible la position relative du plan de la roue, en angle et en distance, par rapport audit plan longitudinal.

Le guidage du plan de la roue induit directement l'attitude du pneu au sol, donc les sollicitations que subit ledit pneu et la position plus ou moins favorable dans laquelle il se trouve pour transmettre des efforts, notamment des efforts dans le sens transversal. Or on sait que ces efforts sont de première importance pour le guidage du véhicule, donc pour la sécurité.

On sait que les véhicules routiers en usage de nos jours subissent un mouvement de roulis en raison même de leur suspension. La force centrifuge provoque en effet un transfert de charge vers l'extérieur du virage, ce qui a pour conséquence un surcroît de compression des suspensions du côté extérieur au virage, et une détente des suspensions du côté intérieur du virage. Or ce roulis est à la fois préjudiciable au confort des passagers et à la tenue de route du véhicule par le surcroît de carrossage des roues qu'il provoque. Le moyen le plus couramment employé pour combattre ce roulis consiste à utiliser une ou plusieurs barres antiroulis. Malheureusement, une barre antiroulis ne peut que limiter le roulis, en opposant à celui-ci un couple de réaction. Par principe, elle ne peut empêcher la prise de roulis, donc elle ne peut empêcher l'inclinaison des roues dans un sens défavorable au bon fonctionnement des pneus.

On connaît aussi d'autres solutions permettant de combattre plus radicalement le roulis. Il est possible de concevoir une suspension pendulaire (purement passive). De telles suspensions peuvent forcer le plan des roues à s'incliner vers l'intérieur du virage par un mécanisme approprié, ou bien elles peuvent aussi reporter l'axe de roulis du véhicule au dessus du centre de gravité, de sorte que, naturellement, la caisse du véhicule s'incline vers l'intérieur du virage. Les suspensions pendulaires n'ont cependant guère connu de succès, probablement en raison de la difficulté d'implanter des bras de suspension et des articulations permettant d'atteindre ce résultat. L'intrusion des bras de suspension et des articulations à des endroits que l'on souhaite laisser libres pour l'habitacle, ou pour implanter la motorisation ou la transmission du véhicule, semble rédhibitoire. Ce problème semble limiter ce type de suspension à quelques types de véhicules comme par exemple dans le domaine des chemins de fer. En outre, en général, les suspensions pendulaires aggravent la surcharge des roues extérieures au virage en déplaçant le centre de gravité du véhicule vers l'extérieur du virage. Ceci est particulièrement préjudiciable dans le cas de véhicules routiers, munis de pneus. Le brevet US 4,487,429, qui représente l'état de la technique le plus proche selon les caractéristiques du préambule de la revendication 1, divulgue un système de suspension permettant d'incliner les roues vers l'intérieur du virage, mais ce système n'apporte pas d'amélioration au confort.

Par ailleurs, la recherche d'un compromis toujours meilleur entre le confort de suspension et la tenue de route conduit à proposer des suspensions dites actives ou semi-actives, dont le pilotage est maintenant rendu possible par les progrès de l'électronique. Cependant, on constate que ces moyens de pilotage se greffent sur des suspensions qui restent de conception mécanique traditionnelle, en s'accommodant de leurs défauts et sans chercher à exploiter de nouveaux paramètres dans la cinématique de suspension. Autrement dit, les suspensions actives ou semi-actives s'attachent seulement à piloter les caractéristiques d'amortissement des suspensions, voire les caractéristiques de flexibilité, tout en conservant des cinématiques de suspension directement dérivées des réalisations conventionnelles.

L'objectif de l'invention consiste à améliorer la sécurité de fonctionnement des véhicules par une cinématique de suspension permettant un contrôle actif du carrossage de la roue, afin de maintenir les pneus dans une position par rapport au sol qui soit aussi favorable que possible à leur adhérence et à leur endurance, même lors de sollicitations extrêmement sévères, tout en améliorant le confort.

L'invention propose un véhicule comportant :
- un châssis roulant et suspendu, permettant de définir un plan longitudinal et vertical constituant un repère lié au châssis, le sens préférentiel de roulage du véhicule étant parallèle audit plan longitudinal,
- au moins deux liaisons au sol comprenant chacune une roue, lesdites liaisons au sol étant montées sur ledit châssis de part et d'autre de celui-ci transversalement, chacune des liaisons au sol comprenant une roue montée sur un support par un dispositif de suspension autorisant le débattement de la roue par rapport au support, lesdites suspensions étant indépendantes l'une de l'autre, le mouvement de débattement ayant lieu parallèlement au plan de la roue, la course du débattement étant suffisante pour procurer le mouvement de suspension verticale requis,
dans lequel chaque support est monté sur ledit châssis par un mécanisme de carrossage comprenant un bras monté sur le support par un axe de support orienté sensiblement parallèlement audit plan longitudinal, et comprenant une barre, ledit mécanisme de carrossage permettant de déplacer ladite barre transversalement par rapport au bras pour faire varier l'angle de carrossage de la roue correspondante, en inclinant le plan de chaque roue par rapport audit plan longitudinal pour imposer aux plans desdites roues un angle de carrossage d'amplitude voulue, inclinant les roues par rapport au sol toutes du même côté, et dans lequel ledit bras est monté sur le châssis par un dispositif de suspension horizontale autorisant un mouvement du support parallèlement au sens préférentiel de roulage.

Il est particulièrement avantageux de piloter l'angle de carrossage pour améliorer le comportement ou le confort du véhicule en virage. L'invention permet d'incliner le plan de chaque roue dans le sens opposé à l'accélération transversale. A cette fin, le véhicule comporte au moins un capteur pour relever la valeur d'au moins un paramètre permettant une évaluation de l'accélération transversale s'exerçant sur le véhicule, des moyens de calcul pour calculer l'amplitude de chaque angle de carrossage en fonction de la ou des valeurs relevées, ledit mécanisme de carrossage comportant des moyens de commande agissant sous le contrôle desdits moyens de calcul.

Typiquement, l'accélération transversale en question est la force centrifuge apparaissant en virage. L'invention permet un contrôle actif du carrossage des roues. Grâce à l'agencement proposé par l'invention, on combat efficacement une tendance des pneus à présenter une usure importante aux épaules, tendance bien connue pour les véhicules de tourisme conduits de façon très sportive. Dans ce cas, la bande de roulement peut se déporter à l'excès axialement vers l'intérieur du véhicule. Le contrôle actif du carrossage corrige cette tendance. En outre, même lorsque, simultanément, la roue subit des variations de carrossage et la suspension verticale subit des débattements importants, le mode de fonctionnement du pneu reste autant que possible optimal.

Notons que le carrossage est l'angle que fait le plan de la roue par rapport à une droite perpendiculaire au sol. Bien entendu, on ne peut agir directement sur celui-ci en contrôlant la position de la roue par rapport au sol, car il n'est pas concevable de prendre appui sur le sol lui-même pour commander la variation de carrossage. On ne peut agir qu'indirectement, via un mécanisme lié au châssis.

L'invention s'applique notamment aux véhicules à quatre roues comme les voitures de tourisme. Or la variation d'angle de carrossage dont il est ici question est de grande ampleur, c'est à dire plus proche des valeurs couramment balayées par les motos que des valeurs de réglage pouvant exister dans un véhicule de tourisme classique, à quatre roues. Pour fixer les idées, la plage de variation est de l'ordre de ± 15° à ± 20°. La plage de variation est en tout cas telle que, lorsque la roue bascule autour de son aire de contact avec le sol, le déplacement dans le sens transversal de la partie radialement supérieure de la roue peut atteindre une ampleur supérieure à la largeur de ladite roue. Bien entendu, l'amplitude du carrossage peut ne pas être identique pour chacune des roues du véhicule, alors que le sens du basculement des roues est lui toujours le même, et est dirigé à l'opposé de l'accélération transversale provenant de la force centrifuge. Le dessus des roues bascule donc dans le sens centripète.

On peut observer que l'invention propose une cinématique de suspension aussi pure que possible : la liaison au sol non seulement offre une suspension verticale, mais en outre elle autorise à tout moment une modification du carrossage de la roue sans pour autant réduire la course de la suspension verticale ni à la compression ni à la détente, et tout en maintenant la suspension verticale dans des conditions optimales de fonctionnement. En toute rigueur, il vaudrait mieux parler de débattement situé dans le plan de roue et dirigé perpendiculairement au mouvement de roulage du véhicule. Par commodité de langage, on désigne ce degré de liberté par « suspension verticale ».

Dans une variante tout particulièrement avantageuse, l'invention propose un ensemble permettant d'intégrer le guidage et les éléments nécessaires à la suspension dite verticale à l'intérieur de la roue. De la sorte, les fonctions essentielles de la suspension (guidage du plan de roue, degré de liberté de débattement dans le sens voulu, et contrôle des mouvements de débattement) se trouvent intégrées à l'intérieur même du volume interne à la roue. Cela permet d'atteindre une bonne compacité de l'ensemble.

Suivant une autre variante, l'invention propose un véhicule de tourisme à contrôle actif du roulis : l'habitacle du véhicule est monté sur le châssis de telle façon qu'il puisse s'incliner vers l'intérieur du virage en fonction de la force centrifuge. Là encore, bien que le roulis soit une mesure de l'angle d'assiette de l'habitacle par rapport au sol, on agit sur l'angle de roulis indirectement, en prenant appui sur le châssis. L'objectif est d'atteindre une plage substantielle de variation de l'angle de roulis de l'habitacle, du même ordre de grandeur que la plage de variation du carrossage. De la sorte, sans nécessairement atteindre les angles de roulis que peut prendre un véhicule à deux roues alignées (une moto par exemple), l'effet produit est suffisamment perceptible pour modifier radicalement les impressions ressenties par les passagers d'un tel véhicule, et ainsi contribuer à leur confort.

L'invention offre également une suspension horizontale des roues, c'est à dire une suspension autorisant le recul des roues par rapport au châssis lorsqu'elles rencontrent un obstacle. Cela contribue au confort en évitant de transmettre au pneu des chocs violents, par la réduction de la vitesse d'impact.

L'invention sera mieux comprise par la description qui va suivre, concernant un véhicule à quatre roues. L'invention s'applique en particulier aux véhicules comportant au moins quatre roues, bien que l'exemple donné ne soit pas limitatif. Parmi les figures annexées,
- la figure 1 est une perspective partielle montrant un quart de véhicule ;
- la figure 2 est une vue schématique de face, montrant les principaux organes d'une liaison au sol en superposition pour deux valeurs du carrossage ;
- la figure 3 est une vue schématique de dessus, montrant les principaux organes d'une liaison au sol en superposition pour deux positions du débattement horizontal de la suspension.

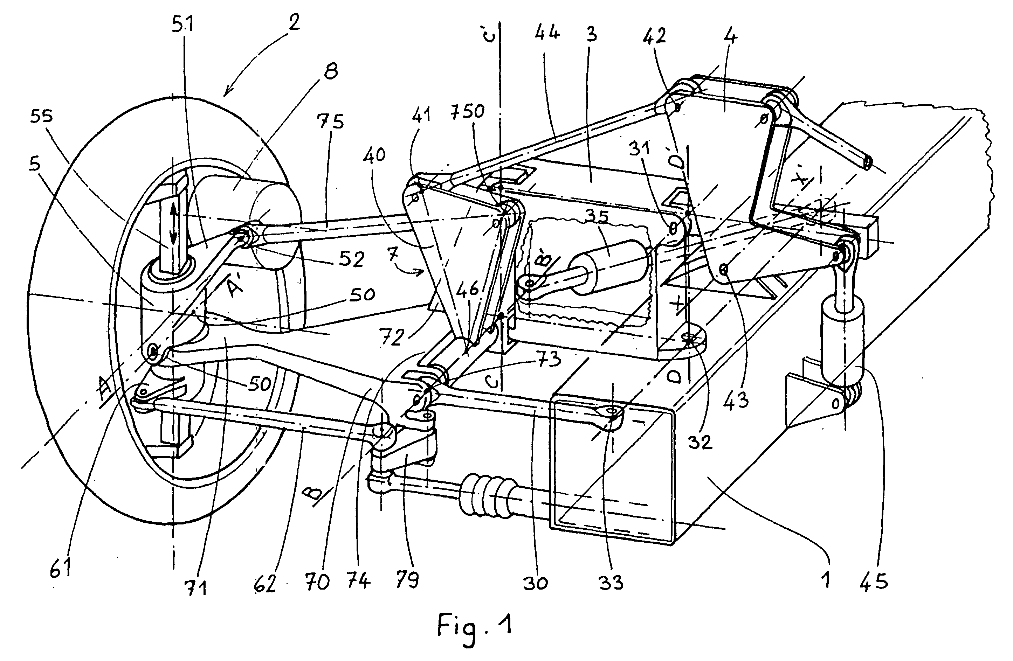

On voit en particulier à la figure 1 un châssis 1 constitué par une poutre centrale, auquel tous les organes du véhicule sont accrochés. De préférence, chaque liaison au sol du véhicule est identique. Quatre roues 2 sont donc montées sur le châssis 1 par des organes identiques, ce qui fait qu'il suffit de décrire une seule des liaisons au sol pour une description complète de l'invention.

On voit un support 5 appartenant à une liaison au sol, ainsi que ses points de montage sur le véhicule : deux points inférieurs 50 formant un axe horizontal AA', ainsi qu'un point supérieur 52 à l'extrémité d'une patte 51. On dispose de trois points de montage du support, de sorte qu'il peut être rigoureusement maintenu en position (maintien du plan de roue). En outre, on voit aussi un levier 61, à l'extrémité duquel on agit pour contrôler le braquage de la roue 2. Sur l'essieu directeur, les leviers 61 sont commandés par un mécanisme de direction, dont on voit une barre de commande 62. De préférence, le mécanisme de direction doit rendre l'angle de braquage des roues suffisamment insensible aux variations de carrossage (voire aux variations de roulis si le roulis de la caisse est contrôlé activement - une implantation convenable est donnée ci-dessous). Sur un essieu non directeur, soit on utilise une liaison au sol simplifiée, ne permettant pas le braquage de la roue, soit on immobilise le porte-roue en connectant de façon appropriée une biellette aux leviers 61, dans ce cas de préférence une biellette de longueur réglable.

Le porte-roue est monté sur le support 5 par l'intermédiaire d'un barreau 55 unique coulissant dans le support 5, le porte-roue étant monté sans degré de liberté sur le barreau 55 aux deux extrémités de celui-ci, ledit barreau 55 étant disposé dans le volume délimité radialement par la jante de ladite roue 2, ledit dispositif de suspension comportant des moyens de contrôle du débattement du porte-roue par rapport au support. C'est de cette manière que l'on autorise le débattement vertical de la roue 2 par rapport au support 5.

Enfin, on voit un moteur 8 de traction, par exemple un moteur hydraulique ou électrique, l'implantation de ce type de traction étant plus commode que l'implantation d'une transmission par un arbre mécanique, compte tenu de la nécessité de s'accommoder des variations de carrossage.

Pour contrôler le débattement, cn utilise par exemple un ressort et un amortisseur, non représentés pour ne pas surcharger le dessin. On pourrait par exemple disposer un ressort parallèlement au barreau 55, et déporté par rapport à celle-ci, logé à l'intérieur de la jante et en avant de la coulisse sur la figure 1. On pourrait utiliser un amortisseur, linéaire ou rotatif, que l'on peut loger de l'autre côté de la coulisse. L'un de ceux-ci ou les deux peuvent bien entendu être l'objet d'un pilotage actif, l'invention ne traitant pas en soi des fonctions ressort et amortissement.

Le support 5 est accroché au châssis 1 du véhicule par l'intermédiaire d'un bras 70 et d'une barre 75. L'extrémité du bras 70 forme une fourche 71 reliée au support 5 par les deux premiers points 50, avec basculement possible du support 5 par rapport au bras 70, autour de l'axe AA'. Le bras 70 est monté sur le châssis du véhicule de façon à pouvoir transmettre le poids suspendu de celui-ci et le reporter sur le support 5. Le bras pourrait être encastré purement et simplement sur le châssis 1, si on ne souhaite pas procurer de suspension horizontale indépendante. Il subsiste encore un degré de liberté de basculement du support 5 autour de l'axe AA'. Sous l'action de moyens de commande du carrossage, on déplace la barre 75 transversalement par rapport au bras 70 pour faire varier la position du point 52 par rapport à la position de l'axe AA', ce qui permet de changer la valeur du carrossage de la roue 2.

De la sorte, le mécanisme de carrossage du véhicule comporte un bras 70 monté sur le support 5 par un axe de support orienté sensiblement parallèlement audit plan longitudinal, et monté sur le châssis 1 sans basculement possible autour d'un axe longitudinal par rapport audit châssis, de façon à transmettre le poids porté par le châssis 1 au support 5 par ledit bras, et dans lequel le mécanisme de carrossage comporte un moyen de commande du basculement du support autour dudit axe de support 5.

Remarquons que la disposition constructive proposée par l'invention permet de, pour toute valeur du carrossage, du braquage et pour toute valeur du débattement de la suspension horizontale, maintenir dans le plan de la roue le degré de liberté en débattement dont a besoin la suspension verticale. C'est aussi en cela que le pneu reste toujours dans des conditions optimales de fonctionnement, même lorsque l'on considère le fonctionnement du pneu en régime transitoire. En virage, et donc sous carrossage même important, le débattement vertical de la roue éventuellement provoqué par un sol bosselé ne change pas significativement les conditions d'appui transversal du véhicule sur ses roues. Faut-il le rappeler, à ce moment, un véhicule s'appuie essentiellement sur les roues extérieures au virage. Toute tendance à provoquer des variations transversales des réactions d'appui sur le sol, de la trajectoire du véhicule, est efficacement combattue.

Ainsi, le véhicule décrit est remarquable en ce que chacune des liaisons au sol comporte un moyeu conçu pour supporter une roue 2 et comporte un porte-roue définissant l'axe de rotation du moyeu, et dans lequel le porte-roue est guidé en translation relative par rapport au support suivant un mouvement rectiligne parallèle à une perpendiculaire à l'axe de rotation du moyeu, le support 5 comprenant au moins un point de montage pour permettre le montage du support 5 sur ledit châssis 1.

Du fait que le véhicule illustrant l'invention comporte une suspension horizontale, le bras 70 et la barre 75 ne sont pas directement montés sur le châssis. Il faut que le mécanisme de carrossage puisse suivre les mouvements de la suspension horizontale, sans induire de variation parasite du carrossage. Avant de décrire les détails du mécanisme de carrossage, examinons d'abord la construction de la suspension horizontale.

Le bras 70, qui reporte le poids du véhicule sur la roue 2, est relié au châssis 1 tout en permettant un mouvement du bras autorisant une suspension horizontale. Il faut, pour transmettre la charge que le bras 70 soit relié au châssis 1 sans basculement possible du bras par rapport au châssis 1 autour d'un axe longitudinal. A cette fin, le bras 70 fait partie d'une pièce formant équerre 7. Celle-ci comporte une branche verticale 72. Aux deux extrémités de la branche 72 se trouvent disposées des chapes permettant la connexion à un caisson 3 via un axe d'articulation vertical CC'. La branche horizontale de l'équerre 7, c'est à dire le bras 70, comporte une rotule 73, formant axe vertical disposé transversalement du côté 74 du bras 70 opposé à la fourche 71, et disposé longitudinalement du côté opposé à la branche verticale 72.

La consultation de la figure 3 permet de se rendre compte du fonctionnement de la suspension horizontale. On observe en particulier la position du bras 70 et du caisson 3 pour une position moyenne en traits pleins, et pour une autre position en traits discontinus. La course d'une telle suspension horizontale est centimétrique, sans que le débattement horizontal interfère ni avec le carrossage ni avec le braquage. C'est la raison pour laquelle un palonnier 79, correctement articulé sur le bras 70, permet à la barre de commande 62 de direction de suivre les mouvements de débattement de la suspension horizontale sans provoquer de braquage induit.

On dispose ainsi de trois points de support du bras 70, permettant de le maintenir rigoureusement, c'est à dire sans basculement possible autour d'un axe longitudinal par rapport au châssis 1. Le poids du véhicule est transmis à la roue 2 par le caisson 3. Afin de permettre le débattement horizontal de la roue tout en transmettant le poids du véhicule, le caisson 3 est monté sur le châssis 1 par un axe vertical DD', procuré par deux chapes séparées 31 et 32. Une biellette 30 forme avec le caisson 3 un parallélogramme, l'ensemble étant vu dans un plan horizontal (voir figure 3). La biellette 30 est montée sur le châssis 1 par un pivot 33. Le mouvement horizontal du bras 70 est contrôlé par un dispositif 35 approprié, par exemple un simple bloc de caoutchouc, compte tenu des faibles débattements prévus.

Ceci constitue un mécanisme de suspension horizontale de la roue correspondante : le poids suspendu est reporté sur le support 5 par le bras 70, la barre 75 étant déplacée transversalement par rapport au bras 70 par lesdits moyens de commande du carrossage, ceux-ci ne voyant pas le poids du véhicule. Le bras 70 est montée sur le châssis 1 par au moins deux axes verticaux (ici, les axes CC' et DD') parallèles et séparés horizontalement, ceux-ci constituant des sommets d'un mécanisme de suspension horizontale formant un parallélogramme, vu dans un plan horizontal, les deux autres sommets étant solidaires du châssis 1.

Beaucoup d'autres dispositifs de suspension horizontale peuvent être adoptés. On peut rappeler que l'essentiel quant à la suspension horizontale est de faire en sorte que le bras (70) soit monté sur le châssis (1) par un dispositif de suspension horizontale autorisant un mouvement du support parallèlement au sens préférentiel de roulage.

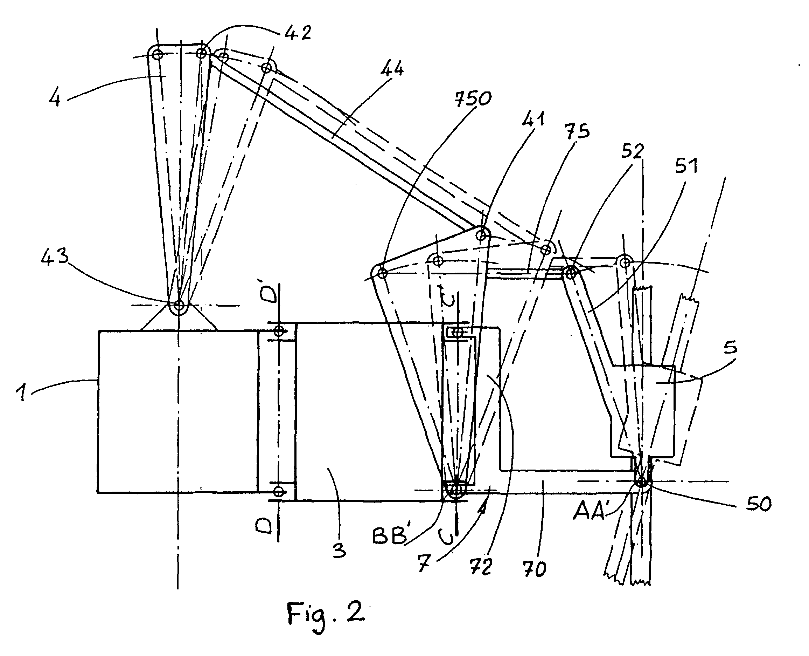

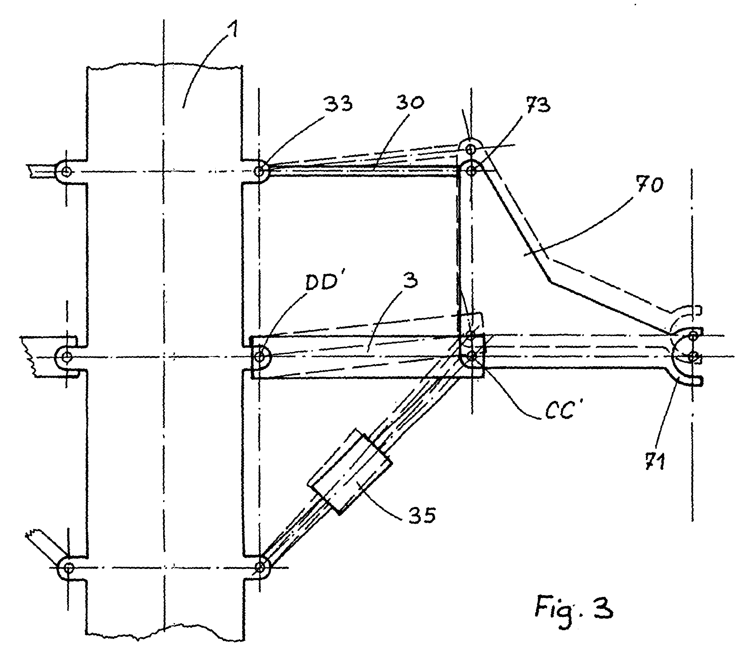

Poursuivons par la description du mécanisme de commande du carrossage de chaque roue 2. Celui-ci, vu dans un plan vertical perpendiculaire à l'axe longitudinal du véhicule (voir figure 2), forme un parallélogramme dont deux sommets sont formés par deux points de montage 50, 52 localisés sur le support 5 et disposés verticalement l'un au dessus de l'autre, et deux côtés sont formés par le bras 70 et la barre 75 qui lui est parallèle, le bras et la barre aboutissant aux points de montage 50, 52. Ce parallélogramme permet de déporter transversalement, vers le châssis, les points de montage 50, 52 du support 5. La longueur de la barre 75 correspond à la longueur du bras 70 mesurée entre l'axe AA' et BB'. La barre 75 relie le point 52 du support 5 au point 750 située sur un renvoi 40, oscillant autour de l'axe BB'. Un levier de carrossage 4 est monté sur le châssis 1, oscillant autour d'un axe longitudinal XX', monté en un point 43 du châssis, situé transversalement au centre du véhicule. Une barre 44 relie un point 41 du renvoi 40 à un point 42 du levier de carrossage 4, les points 46 (situé sur l'axe BB'), 41, 42 et 43 formant un parallélogramme. Les points 41 et 42 sont des rotules, afin de s'accommoder à la fois des variations de carrossage imposées à la roue 2 et des déplacements horizontaux dû au degré de liberté introduit par la suspension horizontale.

Un vérin 45 est interposé entre le levier de carrossage 4 et le châssis 1. Le vérin 45 est piloté de façon à ce qu'il adopte une longueur déterminée selon l'angle de carrossage que l'on veut imposer aux roues 2. La consultation de la figure 2 permet de se rendre compte de l'organisation des mouvements de commande du carrossage de roue. On observe en particulier la position de la barre 75 et la configuration du renvoi 40 et du levier de carrossage 4 pour un carrossage nul en traits pleins et pour une valeur non nulle du carrossage en traits discontinus.

Quant à l'habitacle du véhicule, soit il est solidaire du châssis 1, soit il est monté sur le châssis 1 via l'axe d'articulation longitudinal XX' passant par le point 43. Dans ce dernier cas, le véhicule est tel qu'il comporte :
- un habitacle pour le transport de passagers, montée sur le châssis 1 de façon inclinable autour d'un axe longitudinal, de sorte que l'habitacle forme par rapport audit châssis 1 un angle de roulis variable,
- des moyens mécaniques interposés entre le châssis 1 et l'habitacle, agissant de façon à imposer ledit angle de roulis, dans le même sens que le carrossage,
- des moyens de calcul pour calculer ledit angle de roulis en fonction de la ou des valeurs relevées, lesdits moyens mécaniques interposés agissant sous le contrôle desdits moyens de calcul.

En rendant l'habitacle solidaire du levier de carrossage 4, l'habitacle prend un angle de roulis par rapport au châssis 1 identique à l'angle de carrossage imposé aux roues. Ainsi, les mécanismes de carrossage de chacune des roues sont actionnés par lesdits moyens mécaniques interposés entre le châssis 1 et l'habitacle, de sorte que la variation de carrossage des roues et la variation de l'angle de roulis de l'habitacle sont synchrones. Cela contribue au confort des passagers, y compris par une perception de plus grande sécurité du déplacement du véhicule. Notons que cela contribue aussi en soi à la sécurité, en déplaçant le centre de gravité du véhicule vers l'intérieur du virage, ce qui diminue la part de charge transférée sur les roues extérieures au virage. Non seulement les pneus travaillent dans une position par rapport au sol plus favorable, mais en outre, dans ce mode de réalisation, la surcharge momentanée des pneus du côté extérieur du virage est moindre que s'il n'y avait pas de correction de carrossage.

Afin de piloter l'angle de carrossage, voire de roulis de l'habitacle, en fonction de la force centrifuge qui s'exerce sur le véhicule, on peut installer sur le véhicule au moins un capteur pour relever la valeur d'au moins un paramètre permettant une évaluation de ladite force centrifuge. Il peut s'agir d'une mesure directe de l'accélération centrifuge, ou bien d'une évaluation en fonction de paramètres indirects que sont la vitesse du véhicule et l'angle au volant. Dans tous les cas, des moyens de calcul (per exemple un microprocesseur chargé du programme adéquat) permettent de mettre en oeuvre des stratégies de régulations à l'image de ce que l'on fait pour piloter des suspensions actives, afin de calculer l'angle de roulis à imposer. Une telle stratégie peut tenir compte de divers choix de réalisation, comme par exemple une valeur de proportionnalité fixant le niveau d'accélération transversale auquel on atteint l'angle de roulis maximal permis par le mécanisme de roulis.

Sur la base de ce qui vient d'être exposé, l'homme du métier pourra procéder à des adaptations selon ses propres souhaits sans sortir du cadre de la présente invention comme défini par les revendications. Par exemple, rien n'empêche d'ajouter un filtrage entre l'habitacle et le châssis, par exemple par des cales élastiques en caoutchouc.

## Revendications

1. Véhicule comportant :
• un châssis (1) roulant et suspendu, permettant de définir un plan longitudinal et vertical constituant un repère lié au châssis (1), le sens préférentiel de roulage du véhicule étant parallèle audit plan longitudinal,
• au moins deux liaisons au sol comprenant chacune une roue (2), lesdites liaisons au sol étant montées sur ledit châssis (1) de part et d'autre de celui-ci transversalement, chacune des liaisons au sol comprenant une roue (2) montée sur un support (5) par un dispositif de suspension autorisant le débattement de la roue par rapport au support, lesdites suspensions étant indépendantes l'une de l'autre, le mouvement de débattement ayant lieu parallèlement au plan de la roue, la course du débattement étant suffisante pour procurer le mouvement de suspension verticale requis,
**caractérisé en ce que** chaque support (5) est monté sur ledit châssis (1) par un mécanisme de carrossage comprenant un bras (70) monté sur le support (5) par un axe de support orienté sensiblement parallèlement audit plan longitudinal, et comprenant une barre (75), ledit mécanisme de carrossage permettant de déplacer ladite barre (75) transversalement par rapport au bras (70) pour faire varier l'angle de carrossage de la roue correspondante, en inclinant le plan de chaque roue (2) par rapport audit plan longitudinal pour imposer aux plans desdites roues (2) un angle de carrossage d'amplitude voulue, inclinant les roues par rapport au sol toutes du même côté, et dans lequel ledit bras (70) est monté sur le châssis (1) par un dispositif de suspension horizontale autorisant un mouvement du support parallèlement au sens préférentiel de roulage.

2. Véhicule selon la revendication 1, comportant au moins un capteur pour relever la valeur d'au moins un paramètre permettant une évaluation de l'accélération transversale s'exerçant sur le véhicule, des moyens de calcul pour calculer l'amplitude de chaque angle de carrossage en fonction de la ou des valeurs relevées, ledit mécanisme de carrossage comportant des moyens de commande agissant sous le contrôle desdits moyens de calcul.

3. Véhicule selon la revendication 1 ou 2, dans lequel ledit bras (70) est monté sur le châssis (1) sans basculement possible autour d'un axe longitudinal par rapport audit châssis, de façon à transmettre le poids porté par le châssis (1) au support (5) par ledit bras.

4. Véhicule selon l'une des revendications 1 à 3, dans lequel chacune des liaisons au sol comporte un moyeu conçu pour supporter une roue (2) et un porte-roue définissant l'axe de rotation du moyeu, et dans lequel le porte-roue est guidé en translation relative par rapport au support suivant un mouvement rectiligne parallèle à une perpendiculaire à l'axe de rotation du moyeu.

5. Véhicule selon la revendication 4, dans lequel le porte-roue est monté sur le support (5) par l'intermédiaire d'un barreau (55) unique coulissant dans le support (5), le porte-roue étant monté sur le barreau (55) aux deux extrémités de celui-ci, ledit barreau (55) étant disposé dans le volume délimité radialement par la jante de ladite roue (2), ledit dispositif de suspension comportant des moyens de contrôle du débattement du porte-roue par rapport au support.

6. Véhicule selon l'une des revendications 1 à 5, dans lequel le mécanisme de carrossage, vu dans un plan vertical perpendiculaire à l'axe longitudinal du véhicule, forme un parallélogramme dont deux sommets sont formés par deux points de montage (50, 52) localisés sur le support (5) et disposés verticalement l'un au dessus de l'autre, et deux côtés sont formés par le bras (70) et la barre (75) disposée parallèlement audit bras, le bras et la barre aboutissant aux points de montage (50, 52).

7. Véhicule selon la revendication 6, dans lequel le bras (70) est monté sur le châssis (1) par au moins deux axes verticaux (CC' et DD') parallèles et séparés horizontalement, ceux-ci constituant des sommets d'un mécanisme de suspension horizontale, formant un parallélogramme vu dans un plan horizontal, les deux autres sommets étant solidaires du châssis (1).

8. Véhicule selon l'une des revendications 2 à 7, comportant :
• un habitacle pour le transport de passagers, montée sur le châssis (1) de façon inclinable autour d'un axe longitudinal, de sorte que l'habitacle forme par rapport audit châssis (1) un angle de roulis variable,
• des moyens mécaniques interposés entre le châssis (1) et l'habitacle, agissant de façon à imposer ledit angle de roulis, dans le même sens que le carrossage,
• des moyens de calcul pour calculer ledit angle de roulis en fonction de la ou des valeurs relevées, lesdits moyens mécaniques interposés agissant sous le contrôle desdits moyens de calcul.

9. Véhicule selon la revendication 8, dans lequel les moyens de commande du carrossage sont actionnés par lesdits moyens mécaniques interposés entre le châssis (1) et l'habitacle, de sorte que la variation de carrossage des roues (2) et la variation de l'angle de roulis de l'habitacle sont synchrones.

## Patentansprüche

1. Fahrzeug mit folgenden Merkmalen:
• ein fahrendes und aufgehängtes Fahrgestell (1), das es gestattet, eine einen mit dem Fahrgestell (1) verbundenen Bezug bildende Längs- und Vertikalebene zu definieren, wobei die bevorzugte Fahrtrichtung des Fahrzeugs parallel zur genannten Längsebene verläuft, und
• mindestens zwei Verbindungen mit dem Boden, die jeweils ein Rad (2) aufweisen, wobei die genannten Verbindungen mit dem Boden am genannten Fahrgestell (1), in Querrichtung beiderseits dessen, angebracht sind, jede der Verbindungen mit dem Boden ein Rad (2) aufweist, das durch eine Aufhängungsvorrichtung an einem Träger (5) angebracht ist, die das Einfedern des Rades in Bezug auf den Träger gestattet, die genannten Aufhängungen voneinander unabhängig sind, die Einfederungsbewegung parallel zur Ebene des Rades erfolgt, und der Hub der Einfederung ausreicht, um für die erforderliche vertikale Aufhängungsbewegung zu sorgen,
**dadurch gekennzeichnet, daß** jeder Träger (5) am genannten Fahrgestell (1) durch einen Sturzmechanismus angebracht ist, der einen Arm (70) aufweist, der am Träger (5) durch eine Tragachse angebracht ist, die im wesentlichen parallel zur genannten Längsebene ausgerichtet ist, und eine Stange (75) aufweist, wobei der genannte Sturzmechanismus es gestattet, die genannte Stange (75) bezüglich des Armes (70) in Querrichtung zu versetzen, um den Sturzwinkel des entsprechenden Rades zu verändern, indem er die Ebene eines jeden Rades (2) in Bezug auf die genannte Längsebene neigt, um auf die Ebenen der genannten Räder (2) einen Sturzwinkel in gewünschter Größe aufzubringen, der die Räder bezüglich des Bodens alle auf die selbe Seite neigt, und worin der genannte Arm (70) am Fahrgestell (1) durch eine horizontale Aufhängungsvorrichtung angebracht ist, die eine Bewegung des Trägers parallel zur bevorzugten Fahrtrichtung ermöglicht.

2. Fahrzeug nach Anspruch 1, mit mindestens einem Meßfühler zum Ermitteln des Wertes mindestens eines Parameters, der eine Bewertung der Querbeschleunigung gestattet, die sich auf das Fahrzeug auswirkt, sowie Berechnungsmitteln, um die Größe eines jeden Sturzwinkels in Funktion des oder der ermittelten Wertes bzw. Werte zu errechnen, wobei der genannte Sturzmechanismus Betätigungsmittel aufweist, die unter der Steuerung der genannten Berechnungsmittel wirksam sind.

3. Fahrzeug nach Anspruch 1 oder 2, worin der genannte Arm (70) am Fahrgestell (1) ohne mögliche Schwenkbewegung in Bezug auf das genannte Fahrgestell rund um eine Längsachse angebracht ist, um auf diese Weise das vom Fahrgestell (1) getragene Gewicht durch den genannten Arm auf den Träger (5) zu übertragen.

4. Fahrzeug nach einem der Ansprüche 1 bis 3, worin jede der Verbindungen mit dem Boden eine Nabe aufweist, die dazu konzipiert ist, ein Rad (2) und einen Radträger zu tragen, der die Drehachse der Nabe definiert, und worin der Radträger bei der relativen Translation in Bezug auf den Träger entsprechend einer geradlinigen Bewegung geführt ist, die parallel zu einer Senkrechten zur Drehachse der Nabe erfolgt.

5. Fahrzeug nach Anspruch 4, worin der Radträger am Träger (5) mittels eines einzigen Stabes (55) angebracht ist, der im Träger (5) gleitet, der Radträger am Stab (55) an dessen beiden Enden angebracht ist, der genannte Stab (55) im Raum angeordnet ist, der radial durch die Felge des genannten Rades (2) begrenzt ist, und die genannte Aufhängungsvorrichtung Mittel zum Steuern des Einfederns des Radträgers in Bezug auf den Träger aufweist.

6. Fahrzeug nach einem der Fahrzeuge 1 bis 5, worin der Sturzwinkel, in einer vertikalen Ebene senkrecht zur Längsachse des Fahrzeugs gesehen, ein Parallelogramm bildet, von dem beide Scheitel von zwei Montagepunkten (50, 52) gebildet sind, die auf dem Träger (5) liegen und vertikal übereinander angeordnet sind, und zwei Seiten durch den Arm (70) und die Stange (75) gebildet sind, die parallel zum genannten Arm angeordnet ist, wobei der Stab und die Stange an die Montagepunkte (50, 52) anstoßen.

7. Fahrzeug nach Anspruch 6, worin der Arm (70) am Fahrgestell (1) mit mindestens zwei vertikalen Achsen (CC' und DD') angebracht ist, die parallel und horizontal getrennt sind, und diese die Scheitel eines horizontalen Aufhängungsmechanismus bilden, der, in einer Horizontalebene gesehen, ein Parallelogramm bildet, wobei die beiden anderen Scheitel fest mit dem Fahrgestell (1) verbunden sind.

8. Fahrzeug nach einem der Ansprüche 2 bis 7, mit:
• einem Fahrgastraum für die Beförderung von Fahrgästen, der, um eine Längsachse nicht-neigbar, derart auf dem Fahrgestell (1) angebracht ist, daß der Fahrgastraum gegenüber dem genannten Fahrgestell (1) einen variablen Rollwinkel bildet,
• mechanischen Mitteln, die zwischen dem Fahrgestell (1) und dem Fahrgastraum angeordnet sind und derart einwirken, daß sie den genannten Rollwinkel im selben Sinn wie den Sturz aufbringen, und
• Berechnungsmitteln zum Berechnen des genannten Rollwinkels in Funktion des oder der aufgedeckten Werte(s), wobei die genannten, zwischengeschalteten, mechanischen Mittel unter der Steuerung der genannten Berechnungsmittel wirksam werden.

9. Fahrzeug nach Anspruch 8, worin die Mittel zum Steuern des Sturzes durch die genannten, mechanischen Mittel betätigt werden, die zwischen dem Fahrgestell (1) und dem Fahrgastraum zwischengeschaltet sind, so daß auf diese Weise der Sturz der Räder (2) und die Veränderung des Rollwinkels des Fahrgastraumes sychnron erfolgen.

## Claims

1. A vehicle comprising:
• a suspended running chassis (1) making it possible to define a longitudinal and vertical plane forming a reference linked to the chassis (1), the preferred running direction of the vehicle being parallel to said longitudinal plane,
• at least two wheel connecting systems, each comprising a wheel (2), said wheel connecting systems being mounted on said chassis (1) on either side of the latter in the transverse direction, each of the wheel connecting systems comprising a wheel (2) mounted on a support (5) by means of a suspension device allowing deflection of the wheel relative to the support, said suspensions being independent of one another, the deflecting movement taking place parallel to the plane of the wheel, the deflection stroke being sufficient to afford the required vertical suspension movement, **characterised in that**
each support (5) is mounted on said chassis (1) by means of a camber mechanism comprising an arm (70) mounted on the support (5) by a axis of support oriented substantially parallel to said longitudinal plane, and comprising a rod (75), said camber mechanism making it possible to displace said rod (75) transversely relative to the arm (70) to vary the camber angle of the corresponding wheel, by inclining the plane of each wheel (2) relative to said longitudinal plane in order to impart a camber angle of desired amplitude to the planes of said wheels (2), inclining the wheels relative to the ground all on the same side, and in which said arm (70) is mounted on the chassis (1) by a horizontal suspension device which permits a movement of the support parallel to the preferred running direction.

2. A vehicle according to claim 1, comprising at least one sensor for recording the value of at least one parameter making it possible to evaluate the transverse acceleration exerted on the vehicle, and calculation means for calculating the amplitude of each camber angle as a function of the value or values recorded, said camber mechanism comprising control means acting under the control of said calculation means.

3. A vehicle according to claim 1 or 2, wherein said arm (70) is mounted on the chassis (1) without any possibility of tilting about a longitudinal axis relative to said chassis, so as to transmit the weight carried by the chassis (1) to the support (5) by means of said arm.

4. A vehicle according to one of claims 1 to 3, wherein each of the wheel connecting systems comprises a hub, designed for supporting a wheel (2), and a wheel carrier defining the axis of rotation of the hub, wherein the wheel carrier is guided translationally relative to the support in a rectilinear movement parallel to a line perpendicular to the axis of rotation of the hub.

5. A vehicle according to claim 4, wherein the wheel carrier is mounted on the support (5) by means of a single bar (55) sliding in the support (5), the wheel carrier being mounted on the bar (55) at the two ends of the latter, said bar (55) being arranged in the volume delimited radially by the rim of said wheel (2), said suspension device comprising means for controlling the deflection of the wheel carrier relative to the support.

6. A vehicle according to one of claims 1 to 5, wherein the camber mechanism, as seen in a vertical plane perpendicular to the longitudinal axis of the vehicle, forms a parallelogram, two vertices of which are formed by two mounting points (50, 52) located on the support (5) and arranged vertically one above the other, and two sides of which are formed by the arm (70) and the rod (75) arranged parallel to said arm, the arm and the rod terminating at the mounting points (50, 52).

7. A vehicle according to claim 6, wherein the arm (70) is mounted on the chassis (1) on at least two vertical axes (CC' and DD') which are parallel and horizontally separated, these constituting the vertices of a horizontal suspension mechanism forming a parallelogram, as seen in a horizontal plane, the other two vertices being integral with the chassis (1).

8. A vehicle according to one of claims 2 to 7, comprising:
• a passenger compartment for the transport of passengers, which is mounted on the chassis (1) so as to be inclinable about a longitudinal axis, in such a way that the passenger compartment forms a variable roll angle relative to said chassis (1),
• mechanical means interposed between the chassis (1) and the passenger compartment and acting so as to impart said roll angle in the same direction as the camber,
• calculation means for calculating said roll angle as a function of the value or values recorded, said interposed mechanical means acting under the control of said calculation means.

9. A vehicle according to claim 8, wherein the camber control means are actuated by said mechanical means interposed between the chassis (1) and the passenger compartment, in such a way that the variation in camber of the wheels (2) and the variation in the roll angle of the passenger compartment are synchronous.
